# EUROPEAN PATENT SPECIFICATION

(11) **EP 2 985 946 B1**
(45) Date of publication and mention of the grant of the patent: **01.05.2019**
(21) Application number: 13880191.5
(22) Date of filing: 26.03.2013
(51) Int. Cl.: H04L 9/32, H04L 29/06

(54) **METHOD AND APPARATUS FOR PROTECTION COMMAND OF TRANSMISSION RELAY PROTECTION**
VERFAHREN UND VORRICHTUNG ZUM SCHUTZ VON ÜBERTRAGUNGSRELAIS
PROCÉDÉ ET APPAREIL POUR LA COMMANDE DE PROTECTION D'UNE PROTECTION DE RELAIS DE TRANSMISSION

(43) Date of publication of application: 17.02.2016
(73) Proprietor: Siemens Aktiengesellschaft, 80333 München (DE)
(72) Inventor: SHU, Zhonghua, Nanjing Jiangsu 210028 (CN)
(74) Representative: Patentanwaltskanzlei WILHELM & BECK
(86) International application number: PCT/CN2013/073197
(87) International publication number: WO 2014/153718

(56) References cited:
- CN-A- 101 662 359
- CN-A- 101 764 693
- CN-A- 102 280 929
- US-A1- 2003 078 058
- SUGWON HONG ET AL: "Evaluating Security Algorithms in the Substation Communication Architecture", SCALABLE COMPUTING AND COMMUNICATIONS; EIGHTH INTERNATIONAL CONFERENCE ON EMBEDDED COMPUTING, 2009. SCALCOM-EMBEDDEDCOM'09. INTERNATIONAL CONFERENCE ON, IEEE, PISCATAWAY, NJ, USA, 25 September 2009 (2009-09-25), pages 314-318, XP031571499, ISBN: 978-0-7695-3825-9
- "IEC TS 62351-6. Power systems management and associated information exchange - Data and communications security - Part 6: Security for IEC 61850", SPECIFICATION TECHNIQUE CEI - TECHNICAL SPECIFICATION IEC,, vol. 62351-6, no. 1st edition, 22 June 2007 (2007-06-22), pages 1-16, XP009143183,

## Description

### TECHNICAL FIELD

The present invention relates to the field of Ethernet, and particularly to a method and apparatus for transmitting a protection command for a relay protection.

### BACKGROUND

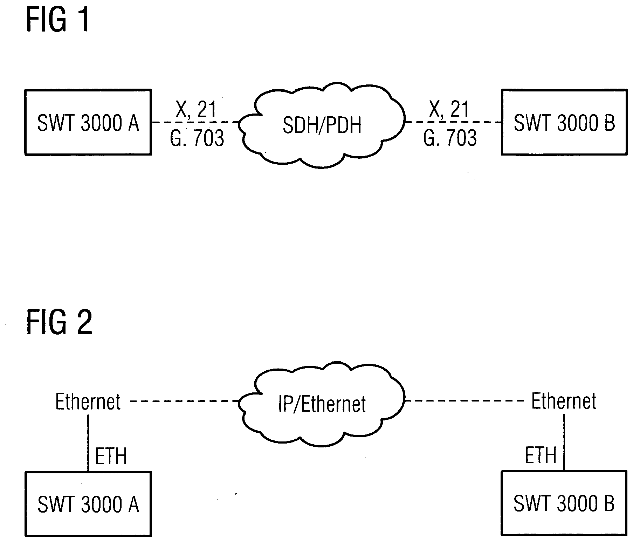

The conventional relay protection system generally comprises a transmission device, which is used for transmitting a protection command of relay protection. This existing protection command transmission device (such as SWT3000 of Siemens Ltd.) usually transmits a protection command of relay protection between two substations via a synchronous digital hierarchy (SDH) or a plesiochronous digital hierarchy (PDH) network, as shown in Fig. 1. Here, the protection command of relay protection, for example, can be a trip command of a relay.

With the wide application of Ethernet technology and in order to reduce cost, the transmission of the protection command of relay protection has been transformed from transmission via the SDH/PDH network to transmission via Ethernet, as shown in Fig. 2.

However, when the protection command of relay protection is transmitted via Ethernet, an attacker easily captures and tampers with the transmitted protection command, so that the SWT3000 will receive a harmful protection command and a wrong action will occur to a substation device.

UGWON HONG ET AL, "Evaluating Security Algorithms in the Substation Communication Architecture", SCALABLE COMPUTING AND COMMUNICATIONS; EIGHTH INTERNATIONAL CONFERENCE ON EMBEDDED COMPUTING, 2009. SCALCOM-EMBEDDEDCOM'09. INTERNATIONAL CONFERENCE ON, IEEE, PISCATAWAY, NJ, USA, (20090925), ISBN 978-0-7695-3825-9, pages 314 - 318 discloses the features of the first parts of claims 1, 2, 4 and 5.

"IEC TS 62351-6. Power systems management and associated information exchange - Data and communications security - Part 6: Security for IEC 61850", SPECIFICATION TECHNIQUE CEI - TECHNICAL SPECIFICATION IEC, (20070622), vol. 62351-6, no. 1st edition, pages 1 - 16, teaches the use of a digital signature to provide message authentication, wherein IEC 62351 messages contain an status number and a sequence number to provide for replay protection.

CN 102 280 929 A teaches the use of a keyed hash function to provide message authentication to the messages exchanged in a SCADA system.

### SUMMARY OF THE INVENTION

The object of the present invention is to provide a method and apparatus for transmitting or receiving a protection command for a relay protection, which can improve the security of transmitting a protection command of relay protection via Ethernet.

The present invention is defined by the methods of independent claims 1 and 2, and the apparatus of independent claims 4 and 5. Preferred embodiments are disclosed in the subclaims.

A method for transmitting a protection command for a relay protection according to the embodiments of the present invention comprises: calculating a message digest of designated data, wherein the designated data comprises a protection command to be sent and password information set with a receiving party in advance; and sending a data packet comprising the protection command and the calculated message digest to the receiving party via Ethernet.

In one particular implementation, the method further comprises: generating sending order information about the protection command according to a sending precedence order of the protection command, wherein the designated data and the data packet further comprise the generated sending order information.

In one particular implementation, the sending order information comprises a status number and a sequence number, wherein the status number represents a command sending round where the protection command is sent, and the sequence number represents a command sending batch where the protection command is sent in the command sending round where the protection command is sent.

In one particular implementation, the sending order information further comprises a time stamp, wherein the time stamp represents a start time of the command sending round where the protection command is sent, and the designated data and the data packet further comprise an allowed time to alive, wherein the allowed time to alive is used for notifying the receiving party of a longest time of waiting for a next data packet.

A method for transmitting a protection command for a relay protection according to the embodiments of the present invention comprises: when a data packet comprising a protection command and a message digest is received, calculating a message digest of designated data, wherein the designated data comprises password information set with a sending party in advance and the protection command; comparing whether the calculated message digest is the same as the message digest comprised in the received data packet; and if the comparing result is no, discarding the received data packet.

In one particular implementation, the received data packet further comprises sending order information about the protection command, wherein the method further comprises: checking whether the sending order information about the protection command is newer than the latest sending order information stored; and if the checking result is no, discarding the data packet.

In one particular implementation, the method further comprises: if the checking result and the comparing result areboth yes, accepting the received data packet; and storing the sending order information about the protection command as the latest sending order information.

In one particular implementation, the sending order information comprises a status number and a sequence number, wherein the status number represents a command sending round where the protection command is sent, and the sequence number represents a command sending batch where the protection command is sent in the command sending round where the protection command is sent.

An apparatus for transmitting a protection command for a relay protection according to the embodiments of the present invention comprises: a calculation module for calculating a message digest of designated data, wherein the designated data comprises a protection command to be sent and password information set with a receiving party in advance; and a sending module for sending a data packet comprising the protection command and the calculated message digest to the receiving party via Ethernet.

In one particular implementation, the apparatus further comprises: a generation module for generating sending order information about the protection command according to a sending precedence order of the protection command, wherein the designated data and the data packet further comprise the generated sending order information.

In one particular implementation, the sending order information comprises a status number and a sequence number, wherein the status number represents a command sending round where the protection command is sent, and the sequence number represents a command sending batch where the protection command is sent in the command sending round where the protection command is sent.

In one particular implementation, the sending order information further comprises a time stamp, wherein the time stamp represents a start time of the command sending round where the protection command is sent, and the designated data and the data packet further comprise an allowed time to alive, wherein the allowed time to alive is used for notifying the receiving party of a longest time of waiting for a next data packet.

An apparatus for receiving a protection command for a relay protection according to the embodiments of the present invention comprises: a calculation module for calculating, when a data packet comprising a protection command and a message digest is received, a message digest of designated data, wherein the designated data comprises password information set with a sending party in advance and the protection command; a comparison module for comparing whether the calculated message digest is the same as the message digest comprised in the received data packet; and a discarding module for discarding the received data packet if the comparing result is no.

In one particular implementation, the received data packet further comprises sending order information about the protection command, wherein the apparatus further comprises a checking module for checking whether the sending order information about the protection command is newer than the latest sending order information stored, and wherein the discarding module is further used for discarding the data packet if the checking result is no.

In one particular implementation, the apparatus further comprises: an acception module for accepting the received data packet if the checking result and the comparing result are both yes; and a storage module for storing the sending order information about the protection command as the latest sending order information.

In one particular implementation, the sending order information comprises a status number and a sequence number, wherein the status number represents a command sending round where the protection command is sent, and the sequence number represents a command sending batch where the protection command is sent in the command sending round where the protection command is sent.

From the description above, it can be seen that the solution of the embodiments of the present invention transmits a data packet comprising a protection command of relay protection and a message digest which is obtained via calculation by combining the protection command and password information set between a sending party and a receiving party in advance together and is used for identifying the integrity of the protection command over Ethernet; however, the data packet does not comprise the password information. Therefore, if an attacker captures and tampers with the protection command in the data packet, since the attacker does not know the password information, whether still using the original message digest in the data packet or recalculating a message digest, an information digest in the data packet is incorrect with respect to the protection command which has been tampered with, and the receiving party can easily detect that the protection command has been tampered with based on the information digest in the data packet, so that the solution of the embodiments of the present invention can improve the security of transmitting a protection command via Ethernet.

### BRIEF DESCRIPTION OF THE DRAWINGS

These and other features and advantages of the present invention will become more apparent by way of the detailed description herein below in conjunction with the accompanying drawings.
Fig. 1 shows a schematic diagram of transmitting a protection command of relay protection of the prior art.
Fig. 2 shows a schematic diagram of transmitting a protection command of relay protection of the prior art.
Fig. 3 shows a flowchart of a method for transmitting a protection command of relay protection according to an embodiment of the present invention.
Fig. 4 shows a schematic diagram of the change of sending order information according to an embodiment of the present invention.
Fig. 5 shows a schematic diagram of an apparatus for transmitting a protection command of relay protection according to an embodiment of the present invention.
Fig. 6 shows a schematic diagram of an apparatus for transmitting a protection command of relay protection according to another embodiment of the present invention.
Fig. 7 shows a schematic diagram of a protection command transmission device according to an embodiment of the present invention.

### DETAILED DESCRIPTION

Various embodiments of the present invention will be described below in detail in combination with the accompanying drawings.

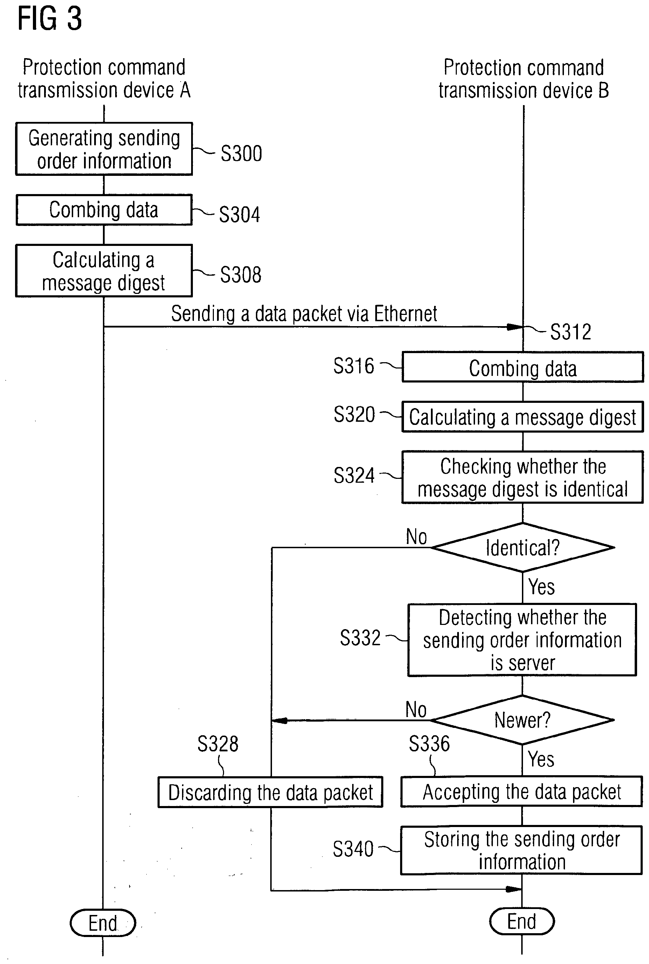

Now refer to Fig. 3 which shows a flowchart of a method for transmitting a protection command for a relay protection according to an embodiment of the present invention. Here, the method of this embodiment is described in detail by taking that a protection command transmission device A transmits a protection command of relay protection to a protection command transmission device B via Ethernet as an example.

As shown in Fig. 3, in step S300, when a protection command M of relay protection is transmitted to the protection command transmission device B, the protection command transmission device A generates sending order information CX about the protection command M according to a sending precedence order of the protection command M. Here, the protection command M can be one or more commands, and the sending order information CX about the protection command M comprises a status number stNum, a sequence number sqNum and a time stamp t, wherein the status number stNum represents a command sending round where the protection command M is sent. In general, in an electric power system, there is a need to transmit a protection command for a relay protection only when a problem occurs to a protected device; and since the problem does not always occur to the protected device, the transmission of the protection command for a relay protection is intermittent, that is, it may be necessary to transmit the protection command in a certain time period, and then it may be necessary to transmit the protection command in a certain time period after a regular interval. Therefore, the command sending round here represents the time period in which the protection command M is being sent. The sequence number sqNum represents a command sending batch where the protection command M is sent in the command sending round where the protection command M is sent. In general, one or more protection commands may be sent in each command sending round, and the command sending batch here represents the protection command M being sent in which batch in the command sending round where the protection command M is sent. The time stamp t represents a start time of the command sending round where the protection command M is sent.

In step S304, the protection command transmission device A combines the protection command M, the sending order information CX about the protection command M, the allowed time to alive timeToAlive and password information PW preset by the protection command transmission device A and the protection command transmission device B into data SJ1. Here, the protection command M, the sending order information CX, the allowed time to alive timeToAlive and the password information PW can be successively arranged together to form the data SJ1 according to an order negotiated by the protection command transmission devices A and B in advance. The allowed time to alive timeToAlive is used for notifying the protection command transmission device B serving as a receiving party of a longest time of waiting for a next data packet.

In step S308, the protection command transmission device A uses the message digest algorithm MD5 to calculate a message digest XZ1 of the data SJ1. The message digest is also called a digital digest, and it is a value uniquely corresponding to a fixed length of data (such as a message or text), which is generated by operating the data by one one-way hash encryption function. If the data changes in journey, a receiver can know whether the data is changed by comparing the newly generated digest of the received data with the original digest. Therefore, the message digest ensures the integrity of the data. The message digest algorithm MD5 is a hash function widely used in the field of computer security, and is used for providing integrity protection of data. The standards of the message digest algorithm MD5 are stated in RFC1321.

In step S312, the protection command transmission device A sends a data packet SB to the protection command transmission device B via Ethernet, wherein the data packet SB comprises the protection command M, the sending order information CX about the protection command M, the allowed time to alive timeToAlive and the message digest XZ1.

In step S316, after receiving the data packet SB from the protection command transmission device A, the protection command transmission device B combines the protection command M, the sending order information CX about the protection command M, the allowed time to alive timeToAlive and the password information PW preset by the protection command transmission device A and the protection command transmission device B which are comprised in the data packet SB into data SJ2. Here, the protection command M, the sending order information CX, the allowed time to alive timeToAlive and the password information PW which are comprised in the data packet SB can be successively arranged together to form the data SJ2 according to an order negotiated by the protection command transmission devices A and B in advance.

In step S320, the protection command transmission device B uses the message digest algorithm MD5 to calculate a message digest XZ2 of the data SJ2.

In step S324, the protection command transmission device B checks whether the calculated message digest XZ2 is the same as the message digest XZ1 comprised in the data packet SB.

In step S328, if the checking result of the step S324 is no, i.e. the message digest XZ2 is different from the message digest XZ1, the protection command M in the data packet SB may be tampered with in the transmission process, the protection command transmission device B discards the data packet SB, and the process is ended.

In step S332, if the checking result of the step S324 is yes, i.e. the message digest XZ2 is the same as the message digest XZ1, the protection command transmission device B detects whether the sending order information CX about the protection command M comprised in the data packet SB is newer than latest sending order information CXnew stored in the protection command transmission device B.

If the checking result of the step S332 is no, i.e. the sending order information CX about the protection command M comprised in the data packet SB is not newer than latest sending order information CXnew stored in the protection command transmission device B, the data packet SB may be a data packet replayed by an attacker for launching a replay attack, and the process proceeds to step S328.

In step S336, if the checking result of the step S332 is yes, i.e. the sending order information CX about the protection command M comprised in the data packet SB is newer than latest sending order information CXnew stored in the protection command transmission device B, it can be deemed that the data packet SB was not attacked by replay in the transmission process, and the protection command transmission device B accepts the data packet SB.

In step S340, the protection command transmission device B stores the sending order information CX about the protection command M comprised in the data packet SB as the latest sending order information CXnew.

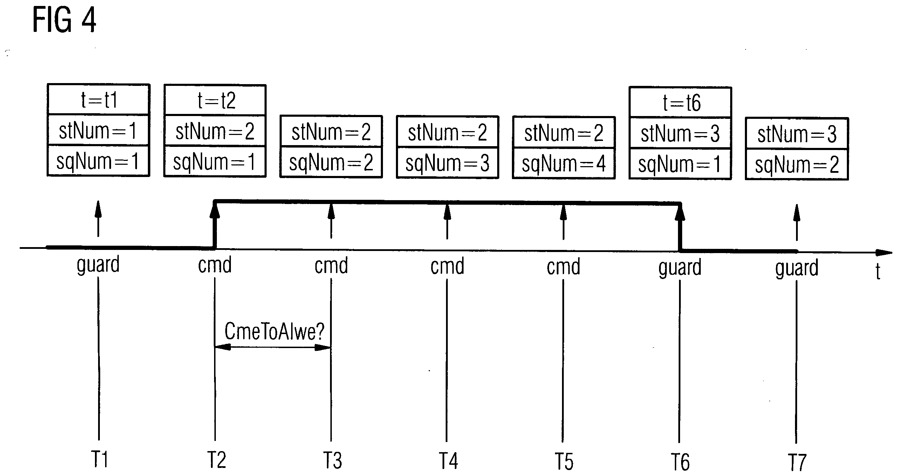

Now refer to Fig. 4, it shows a schematic diagram of the change of sending order information according to an embodiment of the present invention. As shown in Fig. 4, at the initial beginning, the protection command transmission device A does not have a protection command for a relay protection needing to be sent to the protection command transmission device B, and therefore, at a T1 time, the protection command transmission device A sends a data packet comprising a frequency discrimination command guard and sending order information about the frequency discrimination command guard to the protection command transmission device B, and in the sending order information, the time stamp t is a time t1 at the T1 time, the status number stNum is one, and the sequence number is one.

After the T1 time but before a T2 time, the protection command transmission device A receives a protection command to be sent to the protection command transmission device B, and therefore, at the T2 time, the protection command transmission device A sends a data packet comprising the protection command, sending order information about the protection command, an allowed time to alive and a message digest to the protection command transmission device B, wherein in the sending order information, the time stamp t is a time t2 at the T2 time, the status number stNum is two, and the sequence number is one.

At a T3 time, there still exists a protection command to be sent to the protection command transmission device B, and therefore, at the T3 time, the protection command transmission device A sends a data packet comprising the protection command, sending order information about the protection command, an allowed time to alive and a message digest to the protection command transmission device B, wherein in the sending order information, the time stamp t remains being the time t2 at the T2 time and the status number stNum remains being two, but the sequence number is two.

At a T4 time, there still exists a protection command to be sent to the protection command transmission device B, and therefore, at the T4 time, the protection command transmission device A sends a data packet comprising the protection command, sending order information about the protection command, an allowed time to alive and a message digest to the protection command transmission device B, wherein in the sending order information, the time stamp t remains being the time t2 at the T2 time and the status number stNum remains being two, but the sequence number is three.

At a T5 time, there still exists a protection command to be sent to the protection command transmission device B, and therefore, at the T5 time, the protection command transmission device A sends a data packet comprising the protection command, sending order information about the protection command, an allowed time to alive and a message digest to the protection command transmission device B, wherein in the sending order information, the time stamp t remains being the time t2 at the T2 time and the status number stNum remains being two, but the sequence number is four.

At a T6 time, there is no longer a protection command to be sent to the protection command transmission device B, and therefore, at the T6 time, the protection command transmission device A sends a data packet comprising a frequency discrimination command guard and sending order information about the frequency discrimination command guard to the protection command transmission device B, wherein in the sending order information, the time stamp t is a time t6 at the T6 time, the status number stNum is three, and the sequence number is one.

At a T7 time, there is still no a protection command to be sent to the protection command transmission device B, and therefore, at the T7 time, the protection command transmission device A sends a data packet comprising a frequency discrimination command guard and sending order information about the frequency discrimination command guard to the protection command transmission device B, wherein in the sending order information, the time stamp t remains being the time t6 at the T6 time and the status number stNum remains being three, but the sequence number is two.

From the description above, it can be seen that a data packet comprising a protection command for a relay protection and a message digest which is obtained via calculation by combining the protection command and password information set between a sending party and a receiving party in advance together and is used for identifying the integrity of the protection command on Ethernet is transmitted over Ethernet; however, the data packet does not comprise the password information, if an attacker captures and tampers with the protection command in the data packet, since the attacker does not know the password information, whether still using the original message digest in the data packet or recalculating a message digest, an information digest in the data packet is incorrect with respect to the protection command which has been tampered with, and the receiving party can easily detect that the protection command has been tampered with based on the information digest in the data packet, so that the solution of the embodiments can recognize whether the protection command has been tampered with, thereby improving the security of transmitting a protection command for a relay protection via Ethernet.

In addition, since a data packet transmitted over Ethernet comprises sending order information about a protection command for a relay protection and a receiving party stores the latest sending order information, the receiving party can detect whether the received data packet is a data packet replayed by an attacker by comparing the sending order information comprised in the received data packet with the stored sending order information, so that the solution of this embodiment can prevent a replay attack, thereby improving the security of transmitting a protection command for a relay protection via Ethernet. Other variations

A person skilled in the art should understand that, although in the above embodiments, operations (i.e. steps S332- S344) for checking whether a data packet is a replay attack packet are executed after executing operations (i.e. steps S316-S328) for checking whether a protection command is tampered with, the present invention is not limited to this. In some other embodiments of the present invention, executing operations (i.e. steps S316-S328) for checking whether a protection command is tampered with can be performed after executing operations (i.e. steps S332-S344) for checking whether a data packet is a replay attack packet, or executing operations (i.e. steps S316-S328) for checking whether a protection command is tampered with and operations (i.e. steps S332-S344) for checking whether a data packet is a replay attack packet can be performed simultaneously.

A person skilled in the art should understand that, although in the above embodiments, a data packet further comprises an allowed time to alive timeToAlive, the present invention is not limited to this. In some other embodiments of the present invention, a data packet may also not include an allowed time to alive timeToAlive.

A person skilled in the art should understand that, although in the above embodiments, sending order information comprises a status number stNum, a sequence number sqNum and a time stamp t, the present invention is not limited to this. In some other embodiments of the present invention, sending order information may also not include a time stamp t.

A person skilled in the art should understand that, although in the above embodiments, operations (i.e. steps S332-S344) for checking whether a data packet is a replay attack packet are included, the present invention is not limited to this. In some other embodiments of the present invention, for example under a condition that replay attack will not happen, operations (i.e. steps S332-S344) for checking whether a data packet is a replay attack packet may also not be included.

A person skilled in the art should understand that, although in the above embodiments, MD5 is used for calculating a message digest, the present invention is not limited to this. In some other embodiments of the present invention, any appropriate message digest algorithm can be used to calculate a message digest.

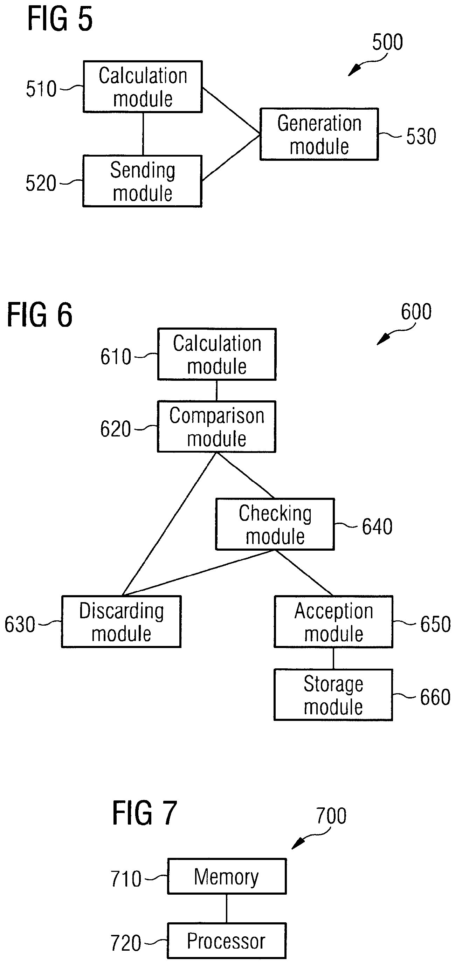

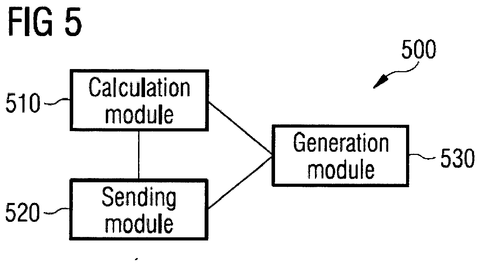

Now refer to Fig. 5, it shows a schematic diagram of an apparatus for transmitting a protection command for a relay protection according to an embodiment of the present invention. The apparatus shown in Fig. 5 can be installed in a protection command transmission device serving as a sending party, and can be realized using software, hardware (e.g., an integrated circuit, an FPGA, etc.) or a combination of software and hardware.

As shown in Fig. 5, an apparatus 500 for transmitting a protection command can comprise a calculation module 510 and a sending module 520, wherein the calculation module 510 is used for calculating a message digest of designated data, wherein the designated data comprises a protection command for a relay protection to be sent and password information set with a receiving party in advance; and a sending module 520 is used for sending a data packet comprising the protection command and the calculated message digest to the receiving party via Ethernet.

In addition, the apparatus 500 can further comprise a generation module 530 for generating sending order information about the protection command according to a sending precedence order of the protection command, wherein the designated data and the data packet further comprise the generated sending order information.

In addition, the sending order information comprises a status number and a sequence number, wherein the status number represents a command sending round where the protection command is sent, and the sequence number represents a command sending batch where the protection command is sent in the command sending round where the protection command is sent.

In addition, the sending order information can further comprise a time stamp, wherein the time stamp represents a start time of the command sending round where the protection command is sent, and the designated data and the data packet can further comprise an allowed time to alive, wherein the allowed time to alive is used for notifying the receiving party of a longest time of waiting for a next data packet.

Now refer to Fig. 6, it shows a schematic diagram of an apparatus for receiving a protection command for a relay protection according to another embodiment of the present invention. The apparatus shown in Fig. 6 can be installed in a protection command transmission device serving as a receiving party, and can be realized using software, hardware (e.g., an integrated circuit, an FPGA, etc.) or a combination of software and hardware.

As shown in Fig. 6, an apparatus 600 for receiving a protection command can comprise a calculation module 610, a comparison module 620 and a discarding module 630. The calculation module 610 is used for calculating, when a data packet comprising a protection command for a relay protection and a message digest is received, a message digest of designated data, wherein the designated data comprises password information set with a sending party in advance and the protection command. The comparison module 620 is used for comparing whether the calculated message digest is the same as the message digest comprised in the received data packet. The discarding module 630 is used for discarding the received data packet if the comparing result is no.

In addition, the received data packet further comprises sending order information of the protection command, wherein the apparatus 600 can further comprise a checking module 640 for checking whether the sending order information about the protection command is newer than the latest sending order information stored, and wherein the discarding module 630 can also be used for discarding the data packet if the checking result is no.

In addition, the apparatus 600 can further comprise an acception module 650 and a storage module 660, wherein the acception module 650 is used for accepting the received data packet if the checking result and the comparing result are both yes; and the storage module 660 is used for storing the sending order information about the protection command as the latest sending order information.

In addition, the sending order information comprises a status number and a sequence number, wherein the status number represents a command sending round where the protection command is sent, and the sequence number represents a command sending batch where the protection command is sent in the command sending round where the protection command is sent.

Now refer to Fig. 7, it shows a schematic diagram of a protection command transmission device according to an embodiment of the present invention. As shown in Fig. 7, a protection command transmission device 700 can comprise a memory 710 and a processor 720, wherein the memory 710 is used for storing an executable instruction, and the processor 720 is used for executing operations executed by various modules in the apparatus 500 or 600 according to the executable instruction stored in the memory 710.

In addition, the embodiment of the present invention further provides a machine readable medium on which an executable instruction is stored, wherein when being executed, the executable instruction cause a machine to execute an operation executed by the processor 720.

## Claims

1. A method for transmitting a protection command for a relay protection, comprising:
calculating a message digest of designated data, wherein the designated data comprises a protection command to be sent and password information set with a receiving party in advance; and
sending a data packet comprising the protection command and the calculated message digest to the receiving party via Ethernet;
**characterized by**
generating a sending order information about the protection command according to a sending precedence order of the protection command, wherein the designated data and the data packet comprise the generated sending order information, and wherein the sending order information comprises a status number, a sequence number and a time stamp, the status number representing a command sending round where the protection command is sent, the sequence number representing a command sending batch where the protection command is sent in the command sending round where the protection command is sent, and the time stamp representing a start time of the command sending round where the protection command is sent.

2. A method for receiving a protection command for a relay protection, comprising:
when a data packet comprising a protection command and a message digest is received via Ethernet, calculating a message digest of designated data, wherein the designated data comprises password information set with a sending party in advance and the protection command;
comparing whether the calculated message digest is the same as the message digest comprised in the received data packet; and
if the comparing result is no, discarding the received data packet.
**characterized in that**
the received data packet further comprises a sending order information about the protection command, wherein the sending order information comprises a status number, a sequence number and a time stamp, the status number representing a command sending round where the protection command is sent, the sequence number representing a command sending batch where the protection command is sent in the command sending round where the protection command is sent, and the time stamp representing a start time of the command sending round where the protection command is sent,
the method further comprises:
checking whether the sending order information about the protection command is newer than the latest sending order information stored; and
if the checking result is no, discarding the data packet.

3. The method as claimed in claim 2, **characterized in that** it further comprises:
if the checking result and the comparing result are both yes, accepting the received data packet; and
storing the sending order information about the protection command as the latest sending order information.

4. An apparatus for transmitting a protection command for a relay protection, comprising:
a calculation module (510) for calculating a message digest of designated data, wherein the designated data comprises a protection command to be sent and password information set with a receiving party in advance; and
a sending module (520) for sending a data packet comprising the protection command and the calculated message digest to the receiving party via Ethernet,
**characterized by**
a generation module (530) for generating sending order information about the protection command according to a sending precedence order of the protection command, wherein the designated data and the data packet further comprise the generated sending order information, and wherein the sending order information comprises a status number, a sequence number and a time stamp, the status number representing a command sending round where the protection command is sent, the sequence number representing a command sending batch where the protection command is sent in the command sending round where the protection command is sent, and the time stamp representing a start time of the command sending round where the protection command is sent.

5. An apparatus for receiving a protection command for a relay protection, comprising:
a calculation module (610) for calculating, when a data packet comprising a protection command and a message digest is received via Ethernet, a message digest of designated data, wherein the designated data comprises password information set with a sending party in advance and the protection command;
a comparison module (620) for comparing whether the calculated message digest is the same as the message digest comprised in the received data packet; and
a discarding module (630) for discarding the received data packet if the comparing result is no.
**characterized in that**
the received data packet further comprises sending order information about the protection command, wherein the sending order information comprises a status number, a sequence number and a time stamp, the status number representing a command sending round where the protection command is sent, the sequence number representing a command sending batch where the protection command is sent in the command sending round where the protection command is sent, and the time stamp representing a start time of the command sending round where the protection command is sent,
wherein the apparatus further comprises a checking module (640) for checking whether the sending order information about the protection command is newer than the latest sending order information stored,
and wherein the discarding module is further used for discarding the data packet if the checking result is no.

6. The apparatus as claimed in claim 5, **characterized in that** it further comprises:
an acception module (650) for accepting the received data packet if the checking result and the comparing result are both yes; and
a storage module (660) for storing the sending order information about the protection command as the latest sending order information.

7. A device for transmitting a protection command for a relay protection, comprising:
a memory (710) for storing an executable instruction; and
a processor (720) for executing the operations executed in any one of claims 1 to 4 according to the executable instruction stored in the memory.

## Patentansprüche

1. Verfahren zum Senden eines Schutzbefehls für einen Relaisschutz, das Folgendes umfasst:
Berechnen einer Nachrichten-Kurzfassung von bezeichneten Daten, wobei die bezeichneten Daten einen zu sendenden Schutzbefehl und mit einer empfangenden Partei vorab festgelegte Kennwortinformationen umfassen; und
Senden eines Datenpakets, umfassend den Schutzbefehl und die berechnete Nachrichten-Kurzfassung, an die empfangende Partei über Ethernet;
**gekennzeichnet durch**
Erzeugen einer Sendereihenfolgeinformation über den Schutzbefehl gemäß einer Sendevorrangreihenfolge des Schutzbefehls, wobei die bezeichneten Daten und das Datenpaket die erzeugte Sendereihenfolgeinformation umfassen, und wobei die Sendereihenfolgeinformation eine Statusnummer, eine Sequenznummer und einen Zeitstempel umfasst, wobei die Statusnummer eine Befehlssenderunde darstellt, in der der Schutzbefehl gesendet wird, wobei die Sequenznummer einen Befehlssendestapel darstellt, in dem der Schutzbefehl innerhalb der Befehlssenderunde gesendet wird, in der der Schutzbefehl gesendet wird, und wobei der Zeitstempel eine Startzeit der Befehlssenderunde darstellt, in der der Schutzbefehl gesendet wird.

2. Verfahren zum Empfangen eines Schutzbefehls für einen Relaisschutz, das Folgendes umfasst:
wenn ein Datenpaket, umfassend einen Schutzbefehl und eine Nachrichten-Kurzfassung, über Ethernet empfangen wird,
Berechnen einer Nachrichten-Kurzfassung von bezeichneten Daten, wobei die bezeichneten Daten mit einer sendenden Partei vorab festgelegte Kennwortinformation und den Schutzbefehl umfassen;
Vergleichen, ob die berechnete Nachrichten-Kurzfassung die gleiche ist wie die in dem empfangenen Datenpaket enthaltene Nachrichten-Kurzfassung; und
wenn das Vergleichsergebnis nein ist, Verwerfen des empfangenen Datenpakets,
**dadurch gekennzeichnet, dass**
das empfangene Datenpaket ferner eine Sendereihenfolgeinformation über den Schutzbefehl umfasst, wobei die Sendereihenfolgeinformation eine Statusnummer, eine Sequenznummer und einen Zeitstempel umfasst, wobei die Statusnummer eine Befehlssenderunde darstellt, in der der Schutzbefehl gesendet wird, wobei die Sequenznummer einen Befehlssendestapel darstellt, in dem der Schutzbefehl innerhalb der Befehlssenderunde gesendet wird, in der der Schutzbefehl gesendet wird, und wobei der Zeitstempel eine Startzeit der Befehlssenderunde darstellt, in der der Schutzbefehl gesendet wird,
wobei das Verfahren ferner Folgendes umfasst:
Prüfen, ob die Sendereihenfolgeinformation über den Schutzbefehl neuer als die letzte gespeicherte Sendereihenfolgeinformation ist; und
wenn das Prüfergebnis nein ist, Verwerfen des Datenpakets,

3. Verfahren nach Anspruch 2, **dadurch gekennzeichnet, dass** es ferner Folgendes umfasst:
wenn das Prüfergebnis und das Vergleichsergebnis beide ja sind, Annehmen des empfangenen Datenpakets; und
Speichern der Sendereihenfolgeinformation über den Schutzbefehl als die letzte Sendereihenfolgeinformation.

4. Einrichtung zum Senden eines Schutzbefehls für einen Relaisschutz, die Folgendes umfasst:
ein Berechnungsmodul (510) zum Berechnen einer Nachrichten-Kurzfassung von bezeichneten Daten, wobei die bezeichneten Daten einen zu sendenden Schutzbefehl und mit einer empfangenden Partei vorab festgelegte Kennwortinformationen umfassen; und
ein Sendemodul (520) zum Senden eines Datenpakets, umfassend den Schutzbefehl und die berechnete Nachrichten-Kurzfassung, an die empfangende Partei über Ethernet;
**gekennzeichnet durch**
ein Erzeugungsmodul (530) zum Erzeugen einer Sendereihenfolgeinformation über den Schutzbefehl gemäß einer Sendevorrangreihenfolge des Schutzbefehls, wobei die bezeichneten Daten und das Datenpaket ferner die erzeugte Sendereihenfolgeinformation umfassen, und wobei die Sendereihenfolgeinformation eine Statusnummer, eine Sequenznummer und einen Zeitstempel umfasst, wobei die Statusnummer eine Befehlssenderunde darstellt, in der der Schutzbefehl gesendet wird, wobei die Sequenznummer einen Befehlssendestapel darstellt, in dem der Schutzbefehl innerhalb der Befehlssenderunde gesendet wird, in der der Schutzbefehl gesendet wird, und wobei der Zeitstempel eine Startzeit der Befehlssenderunde darstellt, in der der Schutzbefehl gesendet wird.

5. Einrichtung zum Empfangen eines Schutzbefehls für einen Relaisschutz, die Folgendes umfasst:
ein Berechnungsmodul (610) zum Berechnen, wann ein Datenpaket, umfassend einen Schutzbefehl und eine Nachrichten-Kurzfassung, über Ethernet empfangen wird, eine Nachrichten-Kurzfassung von bezeichneten Daten, wobei die bezeichneten Daten mit einer sendenden Partei vorab festgelegte Kennwortinformation und den Schutzbefehl umfassen;
ein Vergleichsmodul (620) zum Vergleichen, ob die berechnete Nachrichten-Kurzfassung die gleiche ist wie die in dem empfangenen Datenpaket enthaltene Nachrichten-Kurzfassung; und
ein Verwerfungsmodul (630) zum Verwerfen des empfangenen Datenpakets, wenn das Vergleichsergebnis nein ist.
**dadurch gekennzeichnet, dass**
das empfangene Datenpaket ferner eine Sendereihenfolgeinformation über den Schutzbefehl umfasst, wobei die Sendereihenfolgeinformation eine Statusnummer, eine Sequenznummer und einen Zeitstempel umfasst, wobei die Statusnummer eine Befehlssenderunde darstellt, in der der Schutzbefehl gesendet wird, wobei die Sequenznummer einen Befehlssendestapel darstellt, in dem der Schutzbefehl innerhalb der Befehlssenderunde gesendet wird, in der der Schutzbefehl gesendet wird, und wobei der Zeitstempel eine Startzeit der Befehlssenderunde darstellt, in der der Schutzbefehl gesendet wird,
wobei die Einrichtung ferner ein Prüfmodul (640) zum Prüfen, ob die Sendereihenfolgeinformation über den Schutzbefehl neuer als die letzte gespeicherte Sendereihenfolgeinformation ist, umfasst,
und wobei das Verwerfungsmodul ferner zum Verwerfen des Datenpakets verwendet wird, wenn das Prüfergebnis nein ist.

6. Einrichtung nach Anspruch 5, **dadurch gekennzeichnet, dass** sie ferner Folgendes umfasst:
ein Annahmemodul (650) zum Annehmen des empfangenen Datenpakets, wenn das Prüfergebnis und das Vergleichsergebnis beide ja sind; und
ein Speichermodul (660) zum Speichern der Sendereihenfolgeinformation über den Schutzbefehl als die letzte Sendereihenfolgeinformation.

7. Vorrichtung zum Senden eines Schutzbefehls für einen Relaisschutz, die Folgendes umfasst:
einen Speicher (710) zum Speichern einer ausführbaren Anweisung; und
einen Prozessor (720) zum Ausführen der Operationen, die in einem der Ansprüche 1 bis 4 entsprechend der im Speicher gespeicherten ausführbaren Anweisung ausgeführt werden.

## Revendications

1. Procédé permettant de transmettre une commande de protection pour une protection de relais, comprenant les étapes suivantes :
calculer un digest de message de données désignées, les données désignées comportant une commande de protection à envoyer et des informations de mot de passe définies avec une partie de réception à l'avance ; et
envoyer un paquet de données comportant la commande de protection et le digest de message calculé à la partie de réception par le biais d'Ethernet ;
**caractérisé par**
générer des informations d'ordre d'envoi concernant la commande de protection selon un ordre de priorité d'envoi de la commande de protection, les données désignées et le paquet de données comportant les informations d'ordre d'envoi générées, et les informations d'ordre d'envoi comprenant un numéro d'état, un numéro de séquence et une estampille temporelle, le numéro d'état représentant un tour d'envoi de commande au cours duquel la commande de protection est envoyée, le numéro de séquence représentant un lot d'envoi de commandes dans lequel la commande de protection est envoyée dans le tour d'envoi de commande au cours duquel la commande de protection est envoyée, et l'estampille temporelle représentant un temps de début du tour d'envoi de commande au cours duquel la commande de protection est envoyée.

2. Procédé permettant de recevoir une commande de protection pour une protection de relais, comprenant :
lorsqu'un paquet de données comportant une commande de protection et un digest de message est reçu par le biais d'Ethernet,
calculer un digest de message de données désignées, les données désignées comportant des informations de mot de passe définies avec une partie d'envoi à l'avance et la commande de protection ;
comparer si le digest de message calculé est le même que le digest de message compris dans le paquet de données reçu ; et
si le résultat de comparaison est négatif, rejeter le paquet de données reçu,
**caractérisé en ce que**
le paquet de données reçu comprend en outre des informations d'ordre d'envoi concernant la commande de protection, les informations d'ordre d'envoi comportant un numéro d'état, un numéro de séquence et une estampille temporelle, le numéro d'état représentant un tour d'envoi de commande au cours duquel la commande de protection est envoyée, le numéro de séquence représentant un lot d'envoi de commandes dans lequel la commande de protection est envoyée dans le tour d'envoi de commande au cours duquel la commande de protection est envoyée, et l'estampille temporelle représentant un temps de début du tour d'envoi de commande au cours duquel la commande de protection est envoyée,
le procédé comprend en outre :
vérifier si les informations d'ordre d'envoi concernant la commande de protection sont plus récentes que les dernières informations d'ordre d'envoi stockées ; et
si le résultat de vérification est négatif, rejeter le paquet de données.

3. Procédé selon la revendication 2, **caractérisé en ce qu'**il comprend en outre :
si le résultat de vérification et le résultat de comparaison sont tous deux positifs, accepter le paquet de données reçu ; et
stocker les informations d'ordre d'envoi concernant la commande de protection comme les dernières informations d'ordre d'envoi.

4. Appareil permettant de transmettre une commande de protection pour une protection de relais, comprenant :
un module de calcul (510) destiné à calculer un digest de message de données désignées, les données désignées comportant une commande de protection à envoyer et des informations de mot de passe définies avec une partie de réception à l'avance ; et
un module d'envoi (520) destiné à envoyer un paquet de données comportant la commande de protection et le digest de message calculé à la partie de réception par le biais d'Ethernet,
**caractérisé par**
un module de génération (530) destiné à générer des informations d'ordre d'envoi concernant la commande de protection selon un ordre de priorité d'envoi de la commande de protection, les données désignées et le paquet de données comprenant en outre les informations d'ordre d'envoi générées, et les informations d'ordre d'envoi comportant un numéro d'état, un numéro de séquence et une estampille temporelle, le numéro d'état représentant un tour d'envoi de commande au cours duquel la commande de protection est envoyée, le numéro de séquence représentant un lot d'envoi de commandes dans lequel la commande de protection est envoyée dans le tour d'envoi de commande au cours duquel la commande de protection est envoyée, et l'estampille temporelle représentant un temps de début du tour d'envoi de commande au cours duquel la commande de protection est envoyée.

5. Appareil permettant de recevoir une commande de protection pour une protection de relais, comprenant :
un module de calcul (610) destiné à calculer, lorsqu'un paquet de données comportant une commande de protection et un digest de message est reçu par le biais d'Ethernet, un digest de message de données désignées, les données désignées comportant des informations de mot de passe définies avec une partie d'envoi à l'avance et la commande de protection ;
un module de comparaison (620) destiné à comparer si le digest de message calculé est le même que le digest de message compris dans le paquet de données reçu ; et
un module de rejet (630) destiné à rejeter le paquet de données reçu si le résultat de comparaison est négatif,
**caractérisé en ce que**
le paquet de données reçu comprend en outre des informations d'ordre d'envoi concernant la commande de protection, les informations d'ordre d'envoi comportant un numéro d'état, un numéro de séquence et une estampille temporelle, le numéro d'état représentant un tour d'envoi de commande au cours duquel la commande de protection est envoyée, le numéro de séquence représentant un lot d'envoi de commandes dans lequel la commande de protection est envoyée dans le tour d'envoi de commande au cours duquel la commande de protection est envoyée, et l'estampille temporelle représentant un temps de début du tour d'envoi de commande au cours duquel la commande de protection est envoyée,
l'appareil comportant en outre un module de vérification (640) destiné à vérifier si les informations d'ordre d'envoi concernant la commande de protection sont plus récentes que les dernières informations d'ordre d'envoi stockées,
et le module de rejet étant en outre utilisé pour rejeter le paquet de données si le résultat de vérification est négatif.

6. Appareil selon la revendication 5, **caractérisé en ce qu'**il comprend en outre :
un module d'acceptation (650) destiné à accepter le paquet de données reçu si le résultat de vérification et le résultat de comparaison sont tous deux positifs ; et
un module de stockage (660) destiné à stocker les informations d'ordre d'envoi concernant la commande de protection comme les dernières informations d'ordre d'envoi.

7. Dispositif permettant de transmettre une commande de protection pour une protection de relais, comprenant :
une mémoire (710) destinée à stocker une instruction exécutable ; et
un processeur (720) destiné à exécuter les opérations mises en oeuvre dans l'une quelconque des revendications 1 à 4 selon l'instruction exécutable stockée dans la mémoire.
